# EUROPÄISCHE PATENTSCHRIFT

(11) **EP 1 234 985 B1**
(45) Veröffentlichungstag und Bekanntmachung des Hinweises auf die Patenterteilung: **12.04.2006**
(21) Anmeldenummer: 02003877.4
(22) Anmeldetag: 21.02.2002
(51) Int. Cl.: F16B 7/04

(54) **Klemmverbindersystem**
Clamping connection system
Système de liaison par serrage

(30) Priorität: 21.02.2001 DE 20103064 U
(43) Veröffentlichungstag der Anmeldung: 28.08.2002
(73) Patentinhaber: Hestex Systems B.V., 7332 BE Apeldoorn (NL)
(72) Erfinder: Offenbroich, A., 40217 Düsseldorf (DE)
(74) Vertreter: Stenger, Watzke & Ring

(56) Entgegenhaltungen:
- WO-A-99/09326

## Beschreibung

Die Erfindung betrifft ein Klemmverbindersystem zum lösbaren Verbinden von zwei Elementen, von denen mindestens eines eine hinterschnittene Längsnut und das andere einen darin ausgebildeten Aufnahmeraum aufweist, mit einem in den Aufnahmeraum einsetzbaren, in der Längsnut verklemmbaren Ankerelemente aufweisenden Klemmteil, dessen Ankerelemente durch Betätigen eines Betätigungselementes gegen den Hinterschnitt der Längsnut verklemmbar sind, wobei das Klemmverbindersystem ein zur Aufnahme des Klemmteils ausgebildetes Adapterelement aufweist, wobei das Adapterelement mit darin aufgenommenem Klemmteil in den Aufnahmeraum einsetzbar ist, wobei das Klemmteil und das Adapterelement formschlüssig verbindbar sind, wozu an diesen Elementen jeweils korrespondierende Verbindungsstrukturen ausgebildet sind und wobei als Verbindungsstrukturen an dem Klemmteil Rastnocken und an dem Adapterelement korrespondierende, mit den Rastnocken zusammenwirkende Ausnehmungen ausgebildet sind.

Derartige Klemmverbindersysteme finden ihren Einsatz beispielsweise beim Aufbau von Regalsystemen, Messebauten und dergleichen. Hierbei werden einzelne Elemente mit Hilfe der Klemmverbindersysteme in einer Schnellverbindetechnik zusammengefügt, so daß ein schneller Auf- sowie Abbau des Regalsystems, der Messebauten oder dergleichen möglich ist. Hierzu ist eine schnelle und einfache Handhabung des Klemmverbindersystems von Vorteil.

Klemmverbindersysteme, die diese Anforderungen erfüllen, sind in großer Zahl bekannt. So zeigt beispielsweise die DE 42 39 199 A1 eine Klemmverbindung, mittels derer zwei Profilstücke, von denen wenigstens eines eine hinterschnittene Längsnut und das andere ein rechteckiges Hohlprofil aufweist, miteinander verbunden werden können. Bei den in dieser Druckschrift gezeigten Profilstücken handelt es sich offensichtlich um Metall- oder Kunststoffprofile, wobei beispielsweise im Bereich des Messebaus üblicherweise extrudierte Metall-, beispielsweise Aluminiumprofile, Verwendung finden. In das Hohlprofil des einen Profils wird ein ein Gehäuse aufweisendes Lagerglied eingesetzt, in welchem ein Ausformungen zum Eingreifen in eine hinterschnittene Längsnut eines angrenzenden Profils aufweisendes Halteglied in Form einer Blattfeder eingesetzt ist und über einen Exzenter betätigt werden kann.

Die DE 198 17 427 A1 zeigt einen Klemmverbinder, bei welchem ein Hakenelement mittels einer Exzenterschraube oder einer Kegelschraube zum Verrasten in eine hinterschnittene Längsnut eines Profilelementes betätigt werden kann. Der Klemmverbinder selbst ist dabei in ein kastenförmiges Hohlprofil eines zweiten Profilstücks eingesetzt. Gehalten wird der Klemmverbinder in diesem Hohlprofil dadurch, daß ein Einsetzturm der Schraube in einer in dem Profilstück ausgebildeten Öffnung einrastet.

Eine weitere Klemmvorrichtung ist aus der WO 99/09326 A bekannt. Die Besonderheit der hier beschriebenen Klemmvorrichtung besteht in einer Verschlußhülse, die zur formschlüssigen Aufnahme der Klemmvorrichtung über eine Ausnehmung verfügt. Zusammen mit der Verschlußhülse wird die Klemmvorrichtung zum lösbaren Verbinden zweier Profilstücke in eine in einem der Profilstücke korrespondierend ausgebildete Ausnehmung eingeführt. Sinn und Zweck der Verschlußhülse ist es, die Rückhaltefläche für die Klemmvorrichtung in Bezug auf die bei einem bestimmungsgemäßen Einsatz der Klemmvorrichtung auf die Klemmvorrichtung einwirkende Zugkraft zu vergrößern.

Zwar zeichnen sich die aus dem Stand der Technik bekannten Verbindungssysteme durch eine sichere Verbindung zweier Profilstücke sowie durch eine einfache Handhabung aus, jedoch sind sie in ihrer Verwendung eingeschränkt. So sind die bekannten Verbindungssysteme beispielsweise für das Verbinden eines Holzelementes mit einem eine hinterschnittene Längsnut aufweisenden Element nur bedingt geeignet. Auch ist eine paßgenaue Fertigung sowohl des eigentlichen Verbindungselementes als auch des Hohlprofils, in welches das Verbindungselement eingesetzt wird, erforderlich.

Ausgehend von dieser Problemstellung liegt der Erfindung die **Aufgabe** zugrunde, ein Klemmverbindersystem der eingangs genannten Art anzugeben, welches flexiblere Einsatzmöglichkeiten bietet und welches insbesondere auch im Zusammenhang mit Holzelementen verwendbar ist.

Zur technischen **Lösung** dieser Aufgabe wird mit der Erfindung ein Klemmverbindersystem vorgeschlagen, das dadurch gekennzeichnet ist, daß das Klemmteil ein Gehäuse aufweist und die Rastnocken durch über das Gehäuse überstehende Abschnitte eines quer zu dem Gehäuse angeordneten und das Gehäuse an zwei Seiten durchstoßenden Führungs- und Spreizstiftes für ein die Ankerelemente aufweisendes, in dem Gehäuse angeordnetes Blattfederelement gebildet sind.

Ein erfindungsgemäß vorgesehenes Adapterelement ermöglicht einerseits eine Abstimmung auf unterschiedlich dimensionierte Aufnahmeräume, in welche das Klemmteil einzusetzen ist. So kann beispielsweise ein und dasselbe Klemmteil durch Verwendung verschiedener Adapterelemente an unterschiedlich geformte Aufnahmeräume angepaßt werden. Andererseits erweitert das erfindungsgemäße Adapterelement das mögliche Einsatzspektrum des Klemmverbindersystems. So kann das erfindungsgemäße Klemmverbindersystem weiterhin, wie bekannt, in Metall- oder Kunststoffprofile eingesetzt werden, es kann allerdings auch im Zusammenhang mit Holzelementen verwendet werden. Mit Vorteil können beispielsweise an dem Adapterelement Strukturen vorgesehen sein, mittels derer dieses und mit diesem zusammen das Klemmteil in den Aufnahmeraum festgelegt werden können.

Das Adapterelement ist mit dem Klemmteil verbindbar. Dadurch kann das Klemmteil mit dem Adapterelement verbunden und dann als eine Einheit in den Aufnahmeraum eingesetzt werden. Um einen Austausch des Adapterelementes zu ermöglichen, ist es dabei von Vorteil, wenn das Adapterelement mit dem Klemmteil, wie mit einer weiteren vorteilhaften Ausgestaltung der Erfindung vorgeschlagen, lösbar verbindbar ist. Dabei können das Adapterelement und das Klemmteil formschlüssig verbindbar sein, wozu an diesen Elementen jeweils korrespondierende Verbindungsstrukturen ausgebildet sind. Als Verbindungsstrukturen sind an dem Klemmteil Rastnocken und an dem Adapterelement korrespondierende, mit den Rastnocken zusammenwirkende Ausnehmungen ausgebildet. Selbstverständlich können in umgekehrter Weise auch an dem Adapterelement Rastnocken und an dem Klemmteil korrespondierende, mit den Rastnocken zusammenwirkende Ausnehmungen ausgebildet sein.

Erfindungsgemäß weist das Klemmteil ein Gehäuse auf, und die Rastnocken sind durch über das Gehäuse überstehende Abschnitte eines quer zu dem Gehäuse angeordneten und das Gehäuse an zwei Seiten durchstoßenden Führungs- und Spreizstiftes für ein die Ankerelemente aufweisendes, in dem Gehäuse angeordnetes Blattfederelement gebildet. Auf diese Weise kann ein Element, nämlich der Führungs- und Spreizstift, zwei Funktionen erfüllen. Einerseits dient er der Führung eines Blattfederelementes sowie dem Spreizen zweier Abschnitte des Blattfederelementes, andererseits bilden seine über das Gehäuse des Klemmteils vorstehenden Abschnitte die zum lösbaren Verbinden des Klemmteils mit dem Adapterelement vorgesehenen Rastnocken. Somit wird ein einfacher und damit kostengünstiger Aufbau des Klemmteils verwirklicht.

Gemäß einer weiteren vorteilhaften Ausgestaltung der Erfindung ist das Adapterelement im wesentlichen U-förmig ausgebildet mit zwei seitlich an dem Klemmteil anliegenden Schenkeln und einem die Schenkel verbindenden Steg, wobei bei mit dem Adapterelement verbundenem Klemmteil die Ankerelemente auf einer dem Steg gegenüberliegenden, freien Stirnseite des Klemmteils angeordnet sind. Das Klemmteil wird von einem derart ausgebildeten Adapterelement dreiseitig umgeben, so daß mit dem Adapterelement das Klemmteil in zwei Dimensionen an die Abmessungen eines Aufnahmeraums angepaßt werden kann. Mit Vorteil liegt das Betätigungselement zum Verklemmen der Ankerelemente auf einer nicht von dem Adapterelement abgedeckten Seite des Klemmteils. Dadurch ist gewährleistet, daß das Betätigungselement jederzeit frei zugänglich ist. Des weiteren kann das Betätigungselement, wenn dieses unter einer Federkraft oberhalb der Kontur des Klemmteils vorsteht, zum Fixieren des Klemmteils in dem Aufnahmeraum genutzt werden, indem das Betätigungselement in eine entsprechende, in einer Wandung des Aufnahmeraums ausgebildete Öffnung hineinragt.

Zum Befestigen des Adapterelements in dem Aufnahmeraum kann gemäß einer weiteren vorteilhaften Weiterbildung der Erfindung mindestens eine durch das Adapterelement geführte Durchgangsöffnung zur Durchführung eines Befestigungselementes vorgesehen sein. Dabei können insbesondere im Falle eines U-förmig ausgebildeten Klemmteils zwei Durchgangsöffnungen vorgesehen sein, wobei jeweils eine durch jeden der Schenkel, im wesentlichen in dessen Längsrichtung geführt ist. Durch derartige Durchgangsöffnungen können Befestigungselemente, beispielsweise Schrauben oder ähnliches, geführt werden. Zum bündigen Versenken beispielsweise einer durch die Durchgangsöffnung hindurchgeführten Schraube, kann die Durchgangsöffnung in einem ihrer Endbereiche mit einer beispielsweise dem Schraubenkopf entsprechenden Erweiterung versehen sein.

Als Material für das Adapterelement wird gemäß einer weiteren vorteilhaften Ausgestaltung der Erfindung Kunststoff vorgeschlagen.

Des weiteren wird in einer weiteren vorteilhaften Weiterbildung der Erfindung vorgeschlagen, daß das Klemmverbindersystem ein in einem Gehäuse des Klemmteils angeordnetes Blattfederelement aufweist, welches eine Öffnung aufweist, durch die das Betätigungselement hindurchgeführt wird. Diese Öffnung weist mit Vorteil entlang ihrer Umfangskontur einen von der regelmäßigen Kontur abweichenden Absatz auf. Dieser Absatz wirkt mit einer an dem Betätigungselement ausgebildeten Absatzkante zusammen und verhindert so ein Verkippen des Betätigungselementes, wenn dieses in Richtung des Gehäuseinneren eingedrückt wird. Eine in einem durch die Öffnung hindurchzuführenden Bereich des Betätigungselementes ausgebildeten, zu dem Absatz korrespondierende Struktur ermöglicht ein Einsetzen des Betätigungselementes durch die Öffnung in dem Blattfederelement.

Weitere Merkmale und Vorteile der Erfindung ergeben sich aus der nachfolgenden Beschreibung eines Ausführungsbeispiels anhand der beigefügten Figuren. Dabei zeigen:
- Fig. 1: ein erfindungsgemäßes Klemmverbindersystem integriert in ein mit einem weiteren Element zu verbindendes Element,
- Fig. 2: eine Ansicht auf ein plattenförmiges Element mit darin ausgebildetem Aufnahmeraum zur Aufnahme eines erfindungsgemäßen Klemmverbindersystems,
- Fig. 3: eine geschnittene Ansicht eines Adapterelementes,
- Fig. 4: eine entlang der Schnittlinie V-V genommene Schnittansicht auf das Adapterelement aus Fig. 3,
- Fig.5: einen Längsschnitt durch ein Klemmteil des erfindungsgemäßen Klemmverbindersystems gemäß Fig. 1,
- Fig. 6: das Klemmteil aus Fig. 5 in einer weiteren Schnittansicht unter Fortlassung des Betätigungselements,
- Fig. 7: ein Blattfederelement aus dem Klemmteil des Ausführungsbeispiels des erfindungsgemäßen Klemmverbindersystems gemäß Fig. 1 in einer Draufsicht,
- Fig. 8: eine Seitenansicht des Blattfederelements aus Fig. 7,
- Fig. 9: eine Seitenansicht des Betätigungselements des Klemmteils aus Fig. 5,
- Fig. 10: eine Draufsicht auf das Betätigungselement aus Fig. 9,
- Fig. 11: eine der in Fig. 3 gezeigten Darstellung entsprechende geschnittene Ansicht eines alternativ ausgeführten Adapterelementes und
- Fig. 12: eine Vorderansicht des in Fig. 11 gezeigten Adapterelementes.

In den Figuren sind gleiche Elemente mit gleichen Bezugsziffern versehen. Das nachfolgend anhand der Figuren erläuterte Ausführungsbeispiel dient der Beschreibung und ist nicht beschränkend. Insbesondere ist die spezielle, hier gezeigte Ausgestaltung des Klemmteils lediglich eine mögliche Ausgestaltung, wie es zur Verwirklichung des erfindungsgemäßen Klemmverbindersystems jedoch nicht erforderlich, sondern es kann jedwedes andere, geeignete Klemmteil verwendet werden.

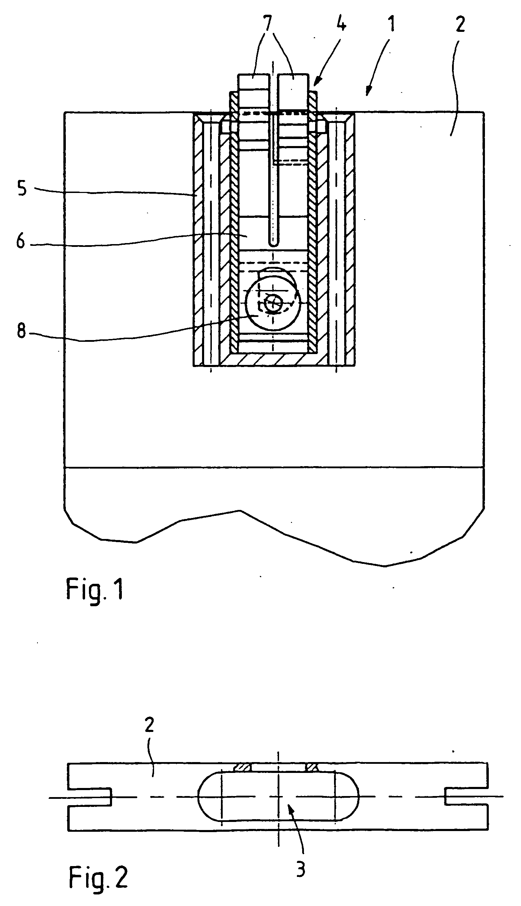

In Fig. 1 ist in teilgeschnittener Ansicht ein erfindungsgemäßes Klemmverbindersystem 1 dargestellt, welches in einem zu verbindenden Element 2 in einem Aufnahmeraum 3 angeordnet ist. Das erfindungsgemäße Klemmverbindersystem 1 weist ein in einem Adapterelement 5 eingefügtes Klemmteil 4 auf, wobei die Einheit aus Klemmteil 4 und Adapterelement 5 insgesamt in dem Aufnahmeraum 3 (Fig. 2) des Elementes 2 versenkt ist. Das Klemmteil 4 weist ein über ein Betätigungselement 8 betätigbares Blattfederelement 6 auf, an welchem über eine Stirnseite des Klemmteils 4 hinausstehende Ankerelemente 7 ausgeformt sind. Diese Ankerelemente werden beim Zusammenfügen des dargestellten Elements 2 mit einem nicht weiter dargestellten Element in eine hinterschnittene Längsnut des zweiten Elements eingeführt, um unter Aufbringung einer Zugkraft mittels des Betätigungselementes 8 in dieser Längsnut verklemmt zu werden.

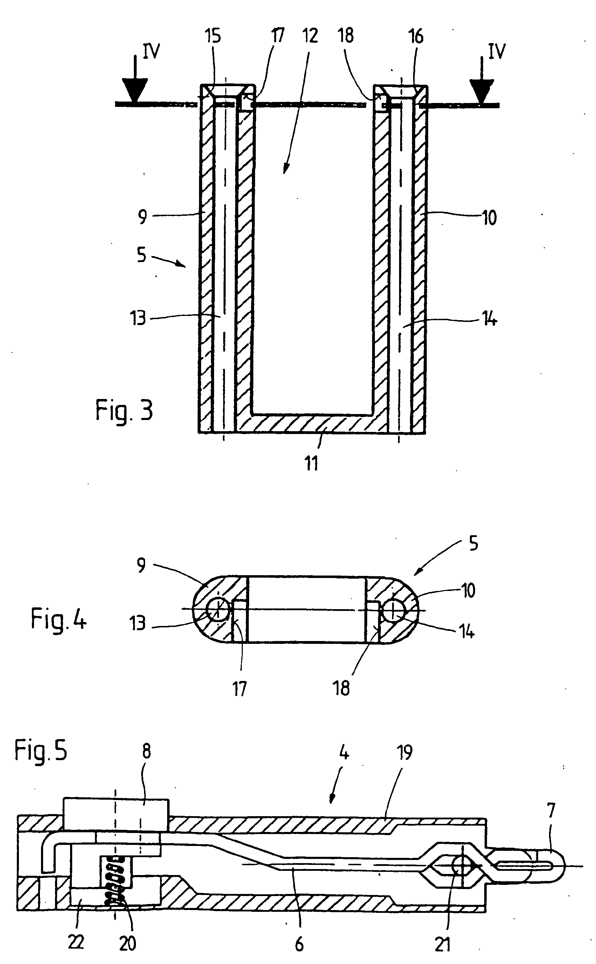

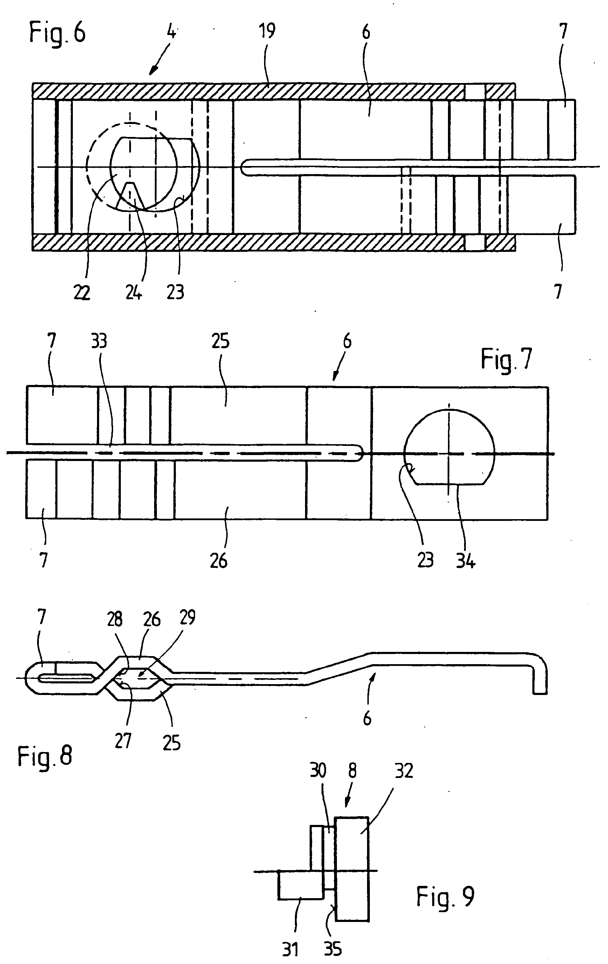

Der genaue Aufbau des Klemmteils 4 wird später anhand der Figuren 5 und 6 eingehender erläutert.

In Fig. 2 ist eine Stimansicht auf ein plattenförmiges Element 2 mit dem darin ausgebildeten Aufnahmeraum 3 gezeigt. Der Aufnahmeraum 3 ist als einseitig offene Ausnehmung ausgebildet, in der das Klemmverbindersystem 1 als Kombination aus Adapterelement 5 und Klemmteil 4 versenkt werden kann.

In den Fign. 3 sowie 4 ist das Adapterelement 5 des gezeigten Klemmverbindersystems 1 genauer dargestellt. Das Adapterelement 5 weist eine im wesentlichen U-förmige Gestalt auf und setzt sich zusammen aus zwei langgestreckten Schenkeln 9 sowie 10, welche über einen Verbindungssteg 11 miteinander ergänzend zu der genannten U-Form verbunden sind. Durch die Schenkel 9 sowie 10 sind jeweils in deren Längsrichtung geführte, axiale Durchgangsöffnungen 13 bzw. 14 eingebracht, die am freien Ende der Schenkel jeweils Erweiterungen 15 bzw. 16 aufweisen. Diese Durchgangsöffnungen dienen zum Hindurchführen eines Befestigungsmittels, insbesondere von Schrauben, wobei die Erweiterungen 15 und 16 zur Aufnahme des jeweiligen Schraubenkopfes dienen, um somit einen bündigen Abschluß des Schraubenkopfes mit dem freien Ende der Schenkel 9 bzw. 10 zu ermöglichen. Weiterhin zu erkennen sind im Bereich der freien Enden der Schenkel 9 bzw. 10 liegende, an der dem jeweils gegenüberliegenden Schenkel zugewandten Seite der Schenkel angebrachte Ausnehmungen 17 sowie 18. Diese Ausnehmungen dienen der Aufnahme von an dem Klemmteil 4 angeordneten Rastnocken, zur Ausbildung einer formschlüssigen Verbindung zwischen dem Adapterelement 5 und dem Klemmteil 4. Insbesondere in Fig. 4 ist zu erkennen, daß sich die Ausnehmungen 17 sowie 18 bis hin zu einer flachen Seite des Adapterelementes 5 erstrecken. Dies ist jedoch für die formschlüssige Verbindung zwischen dem Adapterelement 5 und dem Klemmteil 4 bzw. für die Montage des Klemmteils 4 in das Adapterelement 5 nicht erforderlich, sondem lediglich fertigungstechnisch bedingt.

Durch Hindurchführen von Schrauben durch die Durchgangsöffnungen 13 sowie 14 in die Schenkeln 9 bzw. 10 kann das Adapterelement 5 mit darin angeordnetem und festgelegten Klemmteil 4 in der in Fig. 1 gezeigten Position mit dem Element 2 verschraubt und somit fest verbunden werden.

In den Fign. 5 sowie 6 ist genauer der Aufbau des Klemmteils 4 dargestellt. Das Klemmteil 4 weist ein Gehäuse 19 auf, innerhalb dessen sich das Blattfederelement 6 befindet. Durch eine Öffnung in dem Gehäuse sowie eine Öffnung 23 in dem Blattfederelement 6 hindurchgeführt ragt das Betätigungselement 8 bis in eine in dem Gehäuseboden ausgebildete Vertiefung 22 hinein. Die Öffnung 23 in dem Blattfederelement 6 ist kreisförmig ausgebildet, weist jedoch an einer Seite eine von der Kreiskontur abweichende Form auf. Hier ist entlang einer Sekante ein Absatz 34 ausgebildet, dessen Funktion nachstehend näher erläutert wird. Mittels eines Federelementes 20 wird das Betätigungselement 8 von der Vertiefung 22 in dem Gehäuseboden weggedrückt und steht mit einem Abschnitt über das Gehäuse 19 vor. Das Betätigungselement 8 kann jedoch durch Eindrücken gegen die Federkraft im Gehäuse 19 versenkt werden, so daß das Klemmteil 4 mit daran angeordnetem Adapterelement 5 in einen Aufnahmeraum eingeführt und mittels des federbelasteten Betätigungselementes, welches mit seinem über das Gehäuse 19 vorstehenden Abschnitt in eine entsprechende, in dem Aufnahmeraum ausgebildeten Öffnung einrastet, verbunden werden kann. Bei einem solchen Eindrücken stützt sich das Betätigungselement mit einer daran ausgebildeten Absatzkante 35 (s. Fig. 9) an dem in der Öffnung 23 des Blattfederelements 6 ausgebildeten Absatz 34 ab. Dies bewirkt zum einen, daß das Blattfederelement 6 der Eindrückbewegung folgt und sich so nicht von einer an dem Betätigungselement 8 ausgebildeten Funktionsstruktur (Exzenter 30, s. Fig. 9) löst. Andererseits wird ein Verkippen des Betätigungselementes 8 verhindert. Weiterhin zu erkennen ist ein Führungs- und Spreizstift 21, welcher nahe den Ankerelementen das Blattfederelement 5 durchragt. Schließlich ist in Fig. 6 ein in der kreisförmigen Vertiefung 22 ausgebildeter Anschlag 24 zu erkennen, der die Bewegung des Betätigungselements 8 begrenzt.

In den Fign. 7 sowie 8 ist das Blattfederelement 6 genauer dargestellt. Ausgehend von der Seite des Blattfederelementes, an der die Ankerelemente 7 ausgebildet sind, erstreckt sich ein Längsschlitz 33 in das Blattfederelement 6 hinein, welcher das Blattfederelement 6 an dieser Seite in zwei Federarme 25 und 26 unterteilt. In der den Ankerelementen 7 gegenüberliegenden Seite des Blattfederelementes 6 ist eine Öffnung 23 vorgesehen, welche zur Betätigung des Blattfederelementes mit dem Betätigungselement 8 zusammenwirkt. In der Seitenansicht des Blattfederelementes 6 in Fig. 8 ist zu erkennen, daß die beiden Federarme 25 und 26 durch umgekehrt geführte Abwinkelungen einen Durchlaß 29 ausbilden. Im Montagezustand ist, wie in Fig. 5 gezeigt, durch diesen Durchlaß der Führungs- und Spreizstift 21 geführt. Ankerelementseitig weisen die beiden Federarme 25 und 26 jeweils Anlaufschrägen 27 und 28 auf, welche mit dem Führungs- und Spreizstift 21 bei einer in Richtung des den Ankerelementen 7 gegenüberliegenden Ende des Blattfederelementes 6 gerichteten Zugbewegung des Blattfederelementes 6 mit dem ortsfest im Gehäuse festgelegten Führungs- und Spreizstift 21 derart zusammenwirken, daß die Ankerelemente 7 neben der Zugbewegung weiterhin eine Spreizbewegung ausführen. Diese kombinierte Zug- und Spreizbewegung bewirkt schließlich das Verklemmen der Ankerelemente 7 in einer hinterschnittenen Längsnut eines angrenzenden Elementes, mit dem das Element, in dem das Klemmverbindersystem 1 integriert ist, verbunden werden soll.

Der Führungs- und Spreizstift 21 ist so dimensioniert, daß er durch Öffnungen in dem Gehäuse 19 seitlich übersteht und mit seinen überstehenden Abschnitten nockenartig in die an dem Adapterelement 5 ausgebildeten Rastausnehmungen 17 sowie 18 eingreift (siehe hierzu Fig. 1, wobei dort der Führungs- und Spreizstift 21 nicht eingezeichnet ist).

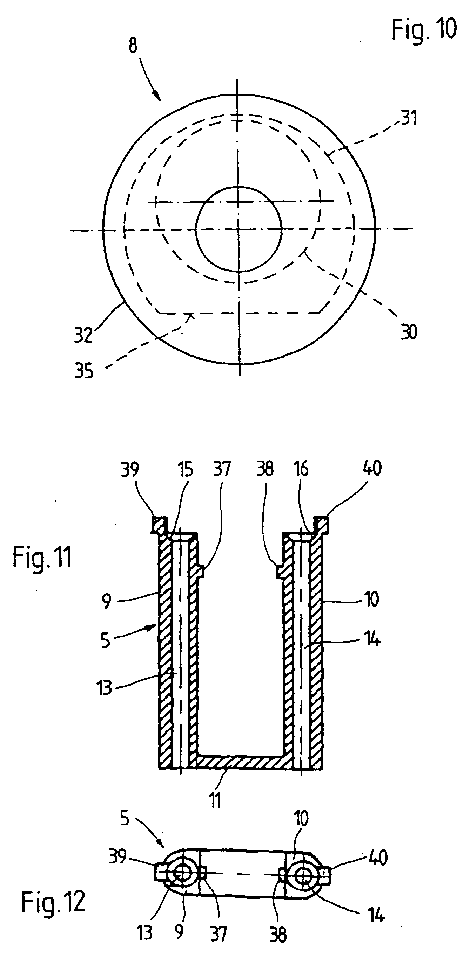

In den Fign. 9 und 10 schließlich ist das Betätigungselement 8 dargestellt. Das Betätigungselement 8 weist einen Kopf 32 sowie ein Gegenstück 31 auf und ein zwischen Kopf 32 und Gegenstück 31 exzentrisch angeordnetes Exzenter 30. Das Gegenstück 31 wirkt darüber hinaus mit dem in der Vertiefung 22 ausgebildeten Anschlag 24 zusammen, um die Bewegung des Betätigungselementes 8 zu beschränken. Um ein Einsetzen des Betätigungselementes 8 durch die in dem Blattfederelement 6 ausgebildete Öffnung 23 hindurch zu ermöglichen, weist das Gegenstück 31 eine zu dem Absatz 34 in der Öffnung 23 korrespondierende Abflachung 36 auf. So kann das Betätigungselement 8 nur einer Winkelstellung eingesetzt werden, ist dann jedoch durch Verdrehen gesichert. An einer (nicht dargestellten) in dem Kopf 32 ausgebildeten Ansatzstruktur kann ein entsprechendes Werkzeug angesetzt werden, mit welchem das Betätigungselement 8 verdreht werden kann. Durch eine solche Verdrehung bewirkt das Exzenter 30, welches mit der in dem Blattfederelement 6 ausgebildeten Öffnung 23 zusammenwirkt eine Druck- bzw. Zugbewegung des Blattfederelementes relativ zu dem Gehäuse 19 des Klemmteils 4. Diese Druck- bzw. Zugbewegung wird, wie oben bereits erwähnt, mittels des Führungs- und Spreizstiftes 21 und der damit zusammenwirkenden Anlaufschrägen 27 und 28 der Federarme 25 und 26 in eine Spreizbewegung der Ankerelemente 7 umgesetzt, wodurch eine Klemmwirkung erreicht wird.

In den Figuren 11 sowie 12 ist ein alternatives Ausführungsbeispiel für ein Adapterelement 5 der Erfindung dargestellt. Das in diesen Figuren dargestellte Adapterelement 5 gleicht im wesentlichen dem Adapterelement aus Figur 3, es setzt sich ebenfalls aus zwei parallel zueinander mit einem Abstand verlaufenden Schenkel 9 sowie 10 zusammen, die über einen Verbindungssteg 11 miteinander verbunden sind. In die Schenkel 9 sowie 10 sind jeweils analog zu dem Ausführungsbeispiel gemäß Figur 3 in Längsrichtung der Schenkel verlaufende Durchgangsöffnungen 13 sowie 14 eingebracht, welche in dem dem Verbindungssteg 11 gegenüberliegenden Endbereich mit Erweiterungen 15 bzw. 16 versehen sind. Das in den Figuren 11 sowie 12 dargestellte Adapterelement 5 weist zum Verbinden mit einem Klemmteil 4 an seinen beiden Schenkeln 9 bzw. 10 zwei auf gleicher Höhe befindliche, jeweils auf den gegenüberliegenden Schenkel gerichtete Rastvorsprünge 37, 38 auf. Diese Rastvorsprünge ersetzen die bei dem in Figur 3 dargestellten Adapterelement 5 vorgesehenen Rastausnehmungen 17 und 18.

Das in den Figuren 11 und 12 dargestellte Adapterelement 5 ist für die Verwendung mit einem (hier nicht dargestellten) Klemmteil 4 vorgesehen, welches in seinem Gehäuse Rastöffnungen aufweist, welche hinsichtlich ihrer Position so angeordnet sind, daß die an dem Adapterelement 5 aufgebrachten Rastvorsprünge in solche Rastöffnungen eingreifen, wenn das Klemmteil korrekt in das Adapterelement eingesetzt ist. Weiterhin sind in den Figuren 11 sowie 12 an den freien Enden der Schenkel 9 sowie 10 angeordnete, vorstehende Fortsätze 39 sowie 40 zu erkennen, welche zum Spreizen der Schenkel 9 sowie 10 ergriffen werden können, um somit das Herauslösen eines in dem Adapterelement 5 aufgenommenen Klemmteils zu erleichtern.

Das Adapterelement 5 ist in den voranstehenden Ausführungsbeispielen aus Kunststoff gefertigt, vorzugsweise durch Spritzgießen.

Mit dem erfindungsgemäßen Klemmverbindersystem wird verglichen mit Klemmverbindersystemen aus dem Stand der Technik eine höhere Flexibilität erreicht, indem ein Klemmteil vorgegebener Größe mittels Zwischenschaltung eines Adapterelementes einerseits an unterschiedlich dimensionierte Aufnahmeräume angepaßt werden kann, andererseits auch in anderen Elementen als aus Kunststoff bzw. Metall gebildeten Profilelementen und hierbei insbesondere in Holzelementen eingesetzt werden kann. Dies wird erreicht durch die in dem Adapterelement geführten Durchgangsöffnungen, in welche Befestigungselemente, beispielsweise Schrauben zum Festlegen des Adapterelementes und damit des Klemmteils geführt werden können.

### Bezugszeichenliste

- 1: Klemmverbindersystem
- 2: Element
- 3: Aufnahmeraum
- 4: Klemmteil
- 5: Adapterelement
- 6: Blattfederelement
- 7: Ankerelement
- 8: Betätigungselement
- 9: Schenkel
- 10: Schenkel
- 11: Verbindungssteg
- 12: Aufnahmebereich
- 13: Durchgangsöffnung
- 14: Durchgangsöffnung
- 15: Erweiterung
- 16: Erweiterung
- 17: Rastausnehmung
- 18: Rastausnehmung
- 19: Gehäuse
- 20: Federelement
- 21: Führungs- und Spreizstift
- 22: Vertiefung
- 23: Öffnung
- 24: Anschlag
- 25: Federarm
- 26: Federarm
- 27: Anlaufschräge
- 28: Anlaufschräge
- 29: Durchlaß
- 30: Exzenter
- 31: Gegenstück
- 32: Kopf
- 33: Längsschlitz
- 34: Absatz
- 35: Absatzkante
- 36: Abflachung
- 37: Rastvorsprung
- 38: Rastvorsprung
- 39: Fortsatz
- 40: Fortsatz

## Patentansprüche

1. Klemmverbindersystem zum lösbaren Verbinden von zwei Elementen, von denen mindestens eines eine hinterschnittene Längsnut und das andere (2) einen darin ausgebildeten Aufnahmeraum (3) aufweist, mit einem in den Aufnahmeraum (3) einsetzbaren, in der Längsnut verklemmbaren Ankerelemente (7) aufweisenden Klemmteil (4), dessen Ankerelemente (7) durch Betätigen eines Betätigungselementes (8) gegen den Hinterschnitt der Längsnut verklemmbar sind, wobei das Klemmverbindersystem (1) ein zur Aufnahme des Klemmteils (4) ausgebildetes Adapterelement (5) aufweist, wobei das Adapterelement (5) mit darin aufgenommenem Klemmteil (4) in den Aufnahmeraum (3) einsetzbar ist, wobei das Klemmteil (4) und das Adapterelement (5) formschlüssig verbindbar sind, wozu an diesen Elementen (4, 5) jeweils korrespondierende Verbindungsstrukturen ausgebildet sind und wobei als Verbindungsstrukturen an dem Klemmteil (4) Rastnocken und an dem Adapterelement (5) korrespondierende, mit den Rastnocken zusammenwirkende Ausnehmungen (17, 18) ausgebildet sind,
**dadurch gekennzeichnet,**
**daß** das Klemmteil (4) ein Gehäuse (19) aufweist und die Rastnocken durch über das Gehäuse (19) überstehende Abschnitte eines quer zu dem Gehäuse (19) angeordneten und das Gehäuse (19) an zwei Seiten durchstoßenden Führungs- und Spreizstiftes (21) für ein die Ankerelemente (7) aufweisendes, in dem Gehäuse (19) angeordnetes Blattfederelement (6) gebildet sind.

2. Klemmverbindersystem nach Anspruch 1, **dadurch gekennzeichnet, daß** das Adapterelement (5) im wesentlichen U-förmig ausgebildet ist mit zwei seitlich an dem Klemmteil (4) anliegenden Schenkeln (9, 10) und einem die Schenkel (9, 10) verbindenden Steg (11), wobei bei mit dem Adapterelement (5) verbundenem Klemmteil (4) die Ankerelemente (7) auf einer dem Steg (11) gegenüberliegenden, freien Stirnseite des Klemmteils (4) angeordnet sind.

3. Klemmverbindersystem nach Anspruch 1 oder 2, **gekennzeichnet durch** eine durch das Adapterelement (5) geführte Durchgangsöffnung (13, 14) zur Durchführung eines Befestigungselementes.

4. Klemmverbindersystem nach Anspruch 3, **dadurch gekennzeichnet, daß** das Adapterelement (5) zwei Durchgangsöffnungen (13, 14) aufweist, die jeweils durch einen der Schenkel (9, 10) im wesentlichen in deren Längsrichtung geführt sind.

5. Klemmverbindersystem nach einem der Ansprüche 1 bis 4, **gekennzeichnet durch** ein Adapterelement (5) aus Kunststoff.

6. Klemmverbindersystem nach einem der Ansprüche 1 bis 5, **gekennzeichnet durch** eine in einem in einem Gehäuse (19) des Klemmteils (4) angeordneten, die Ankerelemente (7) aufweisenden Blattfederelement (6) ausgebildete Öffnung (23) zum Hindurchführen des Betätigungselements (8), wobei die Öffnung (23) entlang ihrer Umfangskontur einen von der regelmäßigen Kontur abweichenden Absatz (34) aufweist.

7. Klemmverbindersystem nach Anspruch 6, **dadurch gekennzeichnet, daß** das Betätigungselement (8) eine Absatzkante (35) aufweist zum Zusammenwirken mit dem Absatz (34) bei montiertem Blattfederelement (6) und Betätigungselement (8).

8. Klemmverbindersystem nach einem der Ansprüche 6 oder 7, **dadurch gekennzeichnet, daß** das Betätigungselement (8) an einem durch die Öffnung (23) hindurchzuführenden Bereich (31) eine zu dem Absatz (34) korrespondierende Struktur (36), aufweist.

## Claims

1. Clamping connector system for the releasable connection of two elements of which at least one has an undercut longitudinal groove and the other (2) has a receiving space (3) constructed therein, with a clamping part (4) which can be inserted into the receiving space (3), has anchor elements (7) which can be locked in the longitudinal groove and of which the anchor elements (7) can be locked against the undercut of the longitudinal groove by actuation of an actuating element (8), wherein the clamping connector system (1) has an adapter element (5) constructed to receive the clamping portion (4) and the adapter element (5) with the clamping part (4) received in it can be inserted into the receiving space (3), the clamping part (4) and the adapter element (5) being connectable by positive locking, for which purpose corresponding connecting structures are constructed on each of these elements (4, 5), and wherein as connecting structures detents are constructed on the clamping part (4) and corresponding recesses (17, 18) which co-operate with the detents are constructed on the adapter element (5), **characterised in that** the clamping part (4) has a housing (19) and the detents are formed by sections, which project over the housing (19), of a guiding and spreading pin (21) for a leaf spring element (6) which has the anchor elements (7) and is disposed in the housing (19).

2. Clamping connector system as claimed in Claim 1, **characterised in that** the adapter element (5) is of substantially U-shaped construction with two arms (9, 10) which butt laterally against the clamping part (4) and a web (11) which connects the arms (9, 10), wherein with the clamping part (4) connected to the adapter element (5) the anchor elements (7) are disposed on a free end face of the clamping part (4) opposite the web (11).

3. Clamping connector system as claimed in Claim 1 or 2, **characterised by** a through opening (13, 14) running through the adapter element (5) for a fixing element to pass through.

4. Clamping connector system as claimed in Claim 3, **characterised in that** the adapter element (5) has two through openings (13, 14) which are each guided by one of the arms (9, 10) in the longitudinal direction thereof.

5. Clamping connector system as claimed in any one of Claims 1 to 4, **characterised by** an adapter element (5) made from plastics material.

6. Clamping connector system as claimed in any one of Claims 1 to 5, **characterised by** an opening (23) for the actuating element (8) to pass through which is constructed in a leaf spring element (6) disposed in a housing (19) of the clamping part (4) and having the anchor elements (7), wherein the opening (23) has along its circumferential contour a shoulder (34) which deviates from the regular contour.

7. Clamping connector system as claimed in Claim 6, **characterised in that** the actuating element (8) has a shoulder edge (35) for co-operation with the shoulder (34) when the leaf spring (6) and the actuating element (8) are installed.

8. Clamping connector system as claimed in any one of Claims 6 or 7, **characterised in that** the actuating element (8) has a structure (36) corresponding to the shoulder (934) on a region (31) which is to be guided through the opening (23).

## Revendications

1. Système d'assemblage par serrage pour l'assemblage amovible de deux éléments dont l'un au moins possède une gorge allongée en contre-dépouille et l'autre (2) un espace de réception (3) formé dedans, avec une partie de serrage (4) pouvant être introduite dans l'espace de réception (3) et présentant des éléments d'ancrage (7) pouvant être serrés dans la gorge longitudinale, dont les éléments d'ancrage (7) peuvent être serrés contre la contre-dépouille de la gorge longitudinale par actionnement d'un élément d'actionnement (8), le système d'assemblage par serrage (1) possédant un élément adaptateur (5) conçu pour recevoir la partie de serrage (4), lequel élément adaptateur (5) peut être introduit dans l'espace de réception (3), avec la partie de serrage (4) qu'il reçoit, la partie de serrage (4) et l'élément adaptateur (5) pouvant être assemblés par engagement positif, ce pour quoi des structures d'assemblage se correspondant mutuellement sont formées sur ces éléments (4, 5), et des ergots d'engagement étant prévus sur la partie de serrage (4) et des évidements (17, 18) correspondants, coopérant avec les ergots d'engagement, sur l'élément adaptateur (5) pour servir de structures d'assemblage, **caractérisé en ce que** la partie de serrage (4) possède un boîtier (19) et les ergots d'engagement sont formés par des parties en saillie par-dessus le boîtier (19) d'une goupille de guidage et d'écartement (21) pour un élément à ressort à lames (6) possédant les éléments d'ancrage (7) et disposé dans le boîtier (19), la goupille étant disposée perpendiculairement au boîtier (19) et traversant le boîtier (19) sur deux côtés.

2. Système d'assemblage par serrage selon la revendication 1, **caractérisé en ce que** l'élément adaptateur (5) est sensiblement en forme de U et possède deux bras (9, 10) reposant latéralement sur la partie de serrage (4) et une barrette (11) reliant les bras (9, 10), les éléments d'ancrage (7) étant disposés sur une face frontale de la partie de serrage (4) faisant face à la barrette (11) lorsque la partie de serrage (4) est assemblée à l'élément adaptateur (5).

3. Système d'assemblage par serrage selon la revendication 1 ou 2, **caractérisé en ce qu'**il comporte une ouverture de passage (13, 14) passant par l'élément adaptateur (5) pour le passage d'un élément de fixation.

4. Système d'assemblage par serrage selon la revendication 3, **caractérisé en ce que** l'élément adaptateur (5) possède deux ouvertures de passage (13, 14) portées chacune à travers l'un des bras (9, 10) sensiblement dans le sens longitudinal de celui-ci.

5. Système d'assemblage par serrage selon l'une quelconque des revendications 1 à 4, **caractérisé en ce que** l'élément adaptateur (5) est en matière synthétique.

6. Système d'assemblage par serrage selon l'une quelconque des revendications 1 à 5, **caractérisé en ce qu'**il comporte une ouverture (23) ménagée dans l'élément de ressort à lames (6) disposé dans un boîtier (19) de la partie de serrage (4) et possédant les éléments d'ancrage (7) pour le passage de l'élément d'actionnement (8), laquelle ouverture (23) possède le long de sa circonférence un talon (34) qui s'écarte du contour régulier.

7. Système d'assemblage par serrage selon la revendication 6, **caractérisé en ce que** l'élément d'actionnement (8) possède un bord en palier (35) destiné à coopérer avec le talon (34) lorsque l'élément de ressort à lames (6) et l'élément d'actionnement (8) sont montés.

8. Système d'assemblage par serrage selon l'une quelconque des revendications 6 ou 7, **caractérisé en ce que** l'élément d'actionnement (8) possède, dans une zone (31) destinée à passer à travers l'ouverture (23), une structure (36) correspondant au talon (34).
